# EUROPEAN PATENT APPLICATION

(11) **EP 4 775 845 A1**
(43) Date of publication of application: **15.07.2026**
(21) Application number: 24862631.9
(22) Date of filing: 26.08.2024
(51) Int. Cl.: F16C 41/00, F16C 19/06, F16C 35/06, H02K 5/16

(54) **ENERGIZATION UNIT, ELECTROLYTIC CORROSION PREVENTION BEARING DEVICE, AND BEARING UNIT**

(30) Priority: 08.09.2023 JP 2023146192; 29.11.2023 JP 2023201811
(71) Applicant: NTN Corporation, Osaka-shi, Osaka 530-0005 (JP)
(72) Inventor: HONDA, Naoto, Iwata-shi, Shizuoka 438-8510 (JP); SASANUMA, Kyohei, Iwata-shi, Shizuoka 438-8510 (JP)
(74) Representative: Grünecker Patent- und Rechtsanwälte PartG mbB
(86) International application number: PCT/JP2024/030181
(87) International publication number: WO 2025/052979

(57) **Abstract**

A conductive unit (1) comprises an annular, electrically conductive case body (2) fitted to a housing (6); at least one conductive member (3) having electrical conductivity, the at least one conductive member (3) protruding radially inward from the case body (2), and kept in sliding contact with a motor shaft (5); and an elastic member (4) biasing the at least one conductive member (3) toward the motor shaft (5), or comprises a case body (2); at least one conductive member (3) protruding radially inward from the case body (2) so as to come into sliding contact with a motor shaft (5); a radial elastic member (16) biasing the at least one conductive member (3) radially inward; and a pressing mechanism (17) for pressing the at least one conductive member (3) from one axial side toward the other axial side. A bearing unit (A) comprises the conductive unit (1) and a bearing (7).

## Description

### TECHNICAL FIELD

The present invention relates to a conductive unit provided adjacent to a bearing that supports a rotary shaft such as a motor shaft, and to an electrolytic corrosion prevention bearing device and a bearing unit that use this conductive unit.

### BACKGROUND ART

In general, a rolling bearing, especially a ball bearing, is used to support a rotary shaft such as a motor shaft. In recent years, inverter control is generally used to effectively operate a motor. Especially, in the case of a vehicle-mounted motor, the motor has been reduced in size from the viewpoint of vehicle mountability, and finer control is performed to effectively use such a motor reduced in size.

It is known that shaft current and shaft voltage are generated in this motor shaft. If this electric current passes through the interior of the bearing, electrolytic corrosion may occur in the metallic bearing rings and the rolling elements. For example, in the below-identified Patent Document 1, filaments 30 (grounding brush) are brought into contact with a shaft 16 of a motor 12 so that electric charge generated in the shaft 16 is discharged to a housing through the filaments 30, thereby ensuring that no electric current passes through the interior of the bearing (see, e.g., Fig. 2 of Patent Document 1). In addition, in the below-identified Patent Document 2, an electrical discharge member 8 (region 10) is brought into contact with a shaft 68 so that electric charge generated in the shaft 68 is discharged to a housing 69 through the electrical discharge member 8, thereby ensuring that no electric current passes through the interior of the bearing (see, e.g., Fig. 24 of Patent Document 2).

### PRIOR ART DOCUMENT(S)

### PATENT DOCUMENT(S)

Patent Document 1: US Patent No. 8,199,453
Patent Document 2: Japanese Patent No. 7033538

### SUMMARY OF THE INVENTION

### PROBLEMS TO BE SOLVED BY THE INVENTION

In each of the arrangements disclosed in Patent Documents 1 and 2, electric charge is discharged by bringing the sliding contact member(s) (filaments 30/electrical discharge member 8) into sliding contact with the motor shaft (shaft 16/shaft68). Accordingly, conductive performance may degrade due to wear, deformation, or the like of the sliding contact member(s) that occurs over time, and the effect of preventing electrolytic corrosion may be insufficient.

It is an object of the present invention to provide a conductive unit, an electrolytic corrosion prevention bearing device, and a bearing unit, which are capable of sustaining the effect of preventing electrolytic corrosion (conductive performance) over a long period and achieving stable conductive performance.

### MEANS FOR SOLVING THE PROBLEMS

In order to achieve the above object, a first invention of the present application provides a conductive unit comprising:
an annular, electrically conductive case body fitted to a housing;
at least one conductive member having electrical conductivity, the at least one conductive member protruding radially inward from the case body, and kept in sliding contact with a motor shaft; and
an elastic member biasing the at least one conductive member toward the motor shaft (first arrangement).

With this arrangement, a bypass path is newly defined through which electric current passes from the motor shaft to the housing, thereby allowing electrolytic corrosion of the bearing arranged between the motor shaft and the housing to be prevented. Further, since the at least one conductive member is biased toward the motor shaft by the elastic member, even if the at least one conductive member experiences wear that occurs over time, a contact state between the motor shaft and the at least one conductive member is maintained, thereby allowing the effect of preventing electrolytic corrosion to be sustained over a long period.

In the first arrangement, it is preferable that the case body comprise an outer annular part; and a retainer fitted in the outer annular part, that the at least one conductive member comprise a plurality of conductive members, and that the retainer is formed with a plurality of bent portions by which the conductive members are disposed circumferentially at equal intervals (second arrangement).

With this arrangement, a self-aligning function is performed by biasing the conductive members, which are accommodated between respective circumferentially adjacent pairs of the bent portions, radially inward by the elastic member, thereby allowing a contact state between the motor shaft and the conductive members to be stabilized.

In the second arrangement, it is preferable that the elastic member be a spring member trained around the conductive members (third arrangement).

With this arrangement, the conductive members can be biased collectively toward the motor shaft by a simple configuration.

In the first to third arrangements, it is preferable that the at least one conductive member and the conductive members be each formed of a metal, carbon, an electrically conductive resin, rubber, or ceramic, or a composite material of these materials (fourth arrangement).

With this arrangement, the conductive function of the conductive unit can be ensured by a simple configuration.

The conductive units according to the first to fourth arrangements may be used in an electrolytic corrosion prevention bearing device comprising: the conductive unit; and a bearing supporting a motor, and disposed such that an end surface of an outer ring of the bearing abuts against the conductive unit (fifth arrangement).

In order to achieve the above object, a second invention of the present application provides a conductive unit comprising:
an annular, electrically conductive case body fitted to a housing, and having a peripheral groove that is open radially inward;
at least one conductive member having electrical conductivity, disposed in the peripheral groove, and protruding radially inward from the case body so as to come into sliding contact with a motor shaft;
a radial elastic member disposed in the peripheral groove, and biasing the at least one conductive member radially inward; and
a pressing mechanism for pressing the at least one conductive member in the peripheral groove from a first axial side toward a second axial side (sixth arrangement).

With this arrangement, a bypass path is newly defined through which electric current passes from the motor shaft to the housing through the at least one conductive member and the case body, thereby allowing electrolytic corrosion of the bearing arranged between the motor shaft and the housing to be prevented. In addition, since the at least one conductive member is biased toward the motor shaft by the radial elastic member, even if the at least one conductive member experiences wear that occurs over time, a contact state between the motor shaft and the at least one conductive member is maintained, thereby allowing conductive performance to be sustained over a long period. Further, since the at least one conductive member is pressed by the pressing mechanism from the first axial side toward the second axial side, a contact state between the at least one conductive member and the case body can be maintained, thereby achieving stable conductive performance.

In the sixth arrangement, it is preferable that the pressing mechanism be any one of the following: (i) a bent portion formed on at least one of a pair of walls defining the peripheral groove, the bent portion being bent toward an inside of the peripheral groove on a radially inner side relative to a radially outer side (seventh arrangement); (ii) an axial elastic member interposed in an axial gap between an inner surface of the peripheral groove and the at least one conductive member (eighth arrangement); and (iii) an inclined surface portion formed on an abutment portion of the at least one conductive member abutting against the radial elastic member, the inclined surface portion having a normal line inclined toward the first axial side (tenth arrangement). With these arrangements, the at least one conductive member can be pressed from the first axial side toward the second axial side, thereby reliably maintaining a contact state between the at least one conductive member and the case body.

In addition, in the eighth arrangement, it is preferable that the axial elastic member be formed of an electrically conductive material composed of a metal, carbon, or an electrically conductive resin, rubber, or ceramic, or a composite material of these materials (ninth arrangement). With this arrangement, a plurality of conductive routes can be ensured, including (i) a conductive route through which electric current directly flows from the at least one conductive member toward the case body, and (ii) a conductive route through which electric current flows from the at least one conductive member to the case body through the axial elastic member, thereby achieving more stable conductive performance.

In the sixth to tenth arrangements, it is preferable that the at least one conductive member comprise a plurality of conductive members (eleventh arrangement). With this arrangement, even if conductive performance of (not all but) one or more of the conductive members is lost, electric current can still flow through the remaining conductive member or members, thereby ensuring stable conductive performance.

In the eleventh arrangement, it is preferable that the case body comprise an outer annular part, and a retainer fitted in the outer annular part, and that the retainer is formed with a plurality of bent portions by which the conductive members are disposed circumferentially at equal intervals (twelfth arrangement). With this arrangement, a self-aligning function can be performed by biasing the conductive members, which are accommodated between respective circumferentially adjacent pairs of the bent portions, radially inward by the radial elastic member, thereby stabilizing a contact state between the motor shaft and the conductive members.

In the sixth arrangement, it is preferable that the radial elastic member be a metallic spring member trained around the conductive members (thirteenth arrangement). With this arrangement, the conductive members can be biased collectively toward the motor shaft by a simple configuration.

In the sixth to thirteenth arrangements, it is preferable that the at least one conductive member and the conductive members are each formed of an electrically conductive material composed of a metal, carbon, or an electrically conductive resin, rubber, or ceramic, or a composite material of these materials (fourteenth arrangement). With this arrangement, the conductive performance of the conductive unit can be ensured by a simple configuration.

The conductive units according to the sixth to fourteenth arrangements may be used in a bearing unit comprising: the conductive unit; and a bearing supporting the motor shaft, the bearing comprising: an outer ring; an inner ring disposed on a radially inner side of the outer ring; rolling elements disposed between the outer ring and the inner ring; and a cage retaining the rolling elements circumferentially at predetermined intervals, the outer ring being disposed to abut against the conductive unit (fifteenth arrangement).

### EFFECTS OF THE INVENTION

In accordance with the first invention of the present application, since a bypass path is newly defined through which electric current passes from the motor shaft to the housing, electrolytic corrosion of the bearing arranged between the motor shaft and the housing can be prevented. Further, since the at least one conductive member is biased toward the motor shaft by the elastic member, even if the at least one conductive member experiences wear that occurs over time, a contact state between the motor shaft and the at least one conductive member is maintained, thereby allowing the effect of preventing electrolytic corrosion of the electrolytic corrosion prevention bearing device to be sustained over a long period.

In addition, in accordance with the conductive unit according to the second invention of the present application and the bearing unit using this conductive unit, since a bypass path is newly defined through which electric current passes from the motor shaft to the housing, electrolytic corrosion of the bearing arranged between the motor shaft and the housing can be prevented. In addition, since the at least one conductive member is biased toward the motor shaft by the radial elastic member, even if the at least one conductive member experiences wear that occurs over time, a contact state between the motor shaft and the at least one conductive member is maintained, thereby allowing the effect of preventing electrolytic corrosion of the electrolytic corrosion prevention bearing device to be sustained over a long period. Further, since the at least one conductive member is pressed by the pressing mechanism from the first axial side toward the second axial side, a contact state between the at least one conductive member and the case body can be maintained, thereby achieving stable conductive performance.

### BRIEF DESCRIPTION OF THE DRAWINGS

Fig. 1 is a sectional view illustrating an embodiment of an electrolytic corrosion prevention bearing device using a conductive unit according to a first invention of the present application.
Fig. 2 is a sectional view taken along line II-II in Fig. 1.
Fig. 3 is an exploded perspective view of the conductive unit shown in Fig. 1.
Fig. 4 is a sectional view illustrating an embodiment of a bearing unit using a conductive unit according to a second invention of the present application.
Fig. 5 is a sectional view taken along line V-V in Fig. 4.
Fig. 6 is a sectional view of a portion of the conductive unit shown in Fig. 4.
Fig. 7 is an exploded perspective view of the conductive unit shown in Fig. 4.
Fig. 8 is a sectional view of a portion of a first variation of the conductive unit shown in Fig. 4.
Fig. 9 is a sectional view of a portion of a second variation of the conductive unit shown in Fig. 4.
Fig. 10 is a sectional view of a portion of a third variation of the conductive unit shown in Fig. 4.
Fig. 11 is a sectional view of a variation of the bearing unit shown in Fig. 4.

### BEST MODE FOR CARRYING OUT THE INVENTION

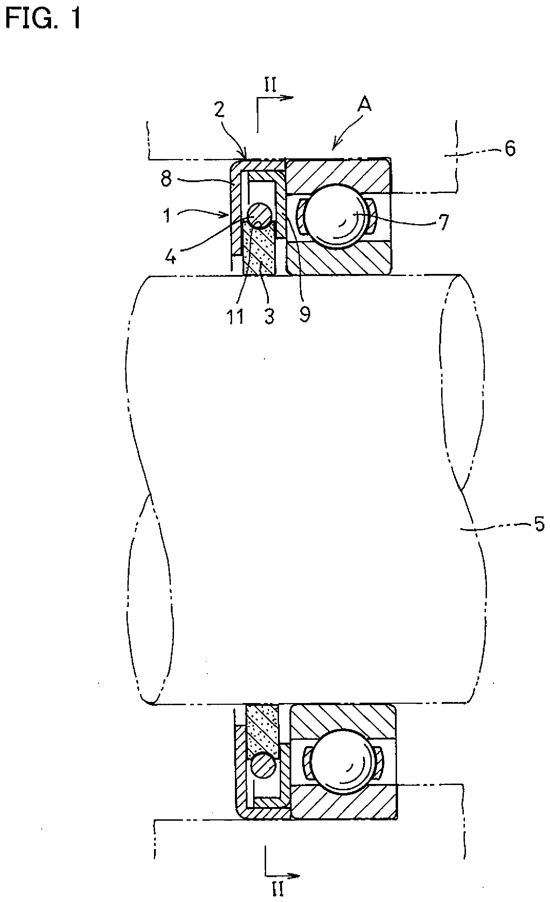

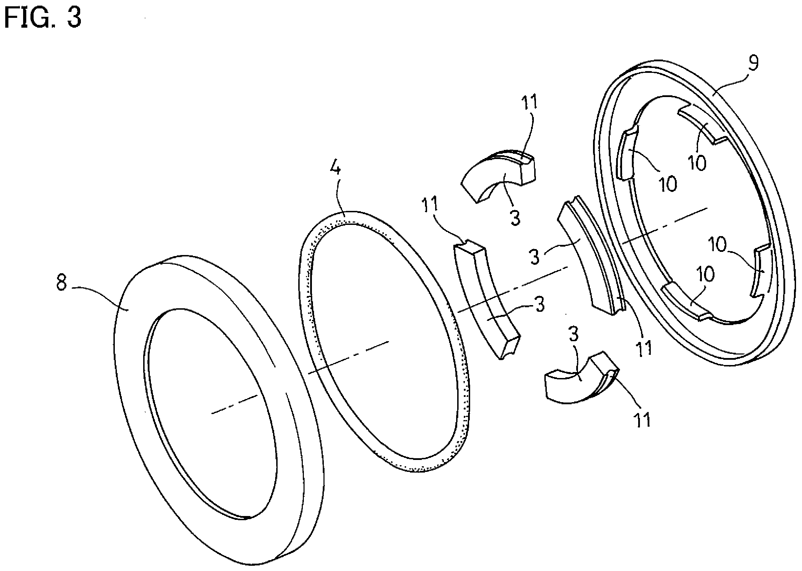

An electrolytic corrosion prevention bearing device A using a conductive unit 1 according to a first invention of the present application is shown in some of the accompanying drawings. As shown in Figs. 1 to 3, the conductive unit 1 comprises, as its main components, a case body 2, conductive members 3, and an elastic member 4 This conductive unit 1 is interposed between a motor shaft 5 used in, e.g., an e-Axle, and a housing 6, and is arranged so as to be adjacent to a bearing 7 (ball bearing in this embodiment) that supports this motor shaft 5. The housing 6 is electrically grounded.

From the viewpoint of the effect of preventing electrolytic corrosion, as shown in Fig. 1, it is preferable that the conductive unit 1 and the bearing 7 be disposed in axial contact with each other; however, an arrangement may be used in which a gap is defined between the conductive unit 1 and the bearing 7. In the following description, the direction along the rotational axis of the motor shaft 5 is referred to as the "axial direction", "axial", or "axially". The direction perpendicular to the rotational axis is referred to as the "radial direction", "radial", or "radially". The direction along the circumference around the rotational axis is referred to as the "circumferential direction", "circumferential", or "circumferentially".

The case body 2 is an annular, electrically conductive member that is fitted to the radially inner surface of the housing 6. This case body 2 comprises an outer annular part 8 having a flange extending in one axial direction from its outer peripheral edge, and a retainer 9 having a flange extending in the other axial direction, which is opposite to the one axial direction, from its outer peripheral edge. As shown in Fig. 1, the flange on the outer annular part 8 and the flange on the retainer 9 are integrally combined together by press-fitting. After placing the flange of the retainer 9 inside of the flange of the outer annular part 8, a snap ring may be provided across the axial end surfaces of the outer annular part 8 and the retainer 9 so as to fix the outer annular part 8 and the retainer 9, thereby improving maintainability.

The outer annular part 8 and the retainer 9 are both formed of a steel material. An axial gap accommodating the conductive members 3 and the elastic member 4 is defined between the outer annular part 8 and the retainer 9, which are fitted to each other. The retainer 9 has a plurality of (four in this embodiment) bent portions 10 formed at predetermined angular intervals, and extending in the other axial direction (i.e., in the direction in which the flange of the retainer 9 extends) from the inner edge of the retainer 9.

Each conductive member 3 is a circular arc-shaped member that has electrical conductivity and protrudes radially inward from the case body 2 so as to come into sliding contact with the motor shaft 5, which is supported by the bearing 7. A respective one of the conductive members 3 is accommodated between each circumferentially adjacent pair of the bent portions 10 on the retainer 9. In this embodiment, four conductive members 3 are circumferentially arranged at equal angular intervals. The number of the conductive members 3 can be changed as appropriate, but it is preferable that a plurality of conductive members be provided. The number of the bent portions 10 on the retainer 9 is determined in correspondence with the number of the conductive members 3. In this embodiment, polytetrafluoroethylene (PTFE) containing carbon is used as the material of each conductive member 3. The radially inner surface of each conductive member 3 constitutes a part of the cylindrical surface and is in surface contact with the outer peripheral surface of the motor shaft 5. A peripheral groove 11 is formed along the outer peripheral edge of each conductive member 3.

As the material of each conductive member 3, instead of PTFE containing carbon, a metal, carbon, or an electrically conductive resin, rubber, or ceramic, such as polyetheretherketone (PEEK) containing carbon, or a composite material of these materials may be used. In addition, the surface of each conductive member 3 (especially the radially inner surface thereof that is in sliding contact with the motor shaft 5) may be subjected to a surface treatment such as a coating for improving electrical conductivity and wear resistance (for example, an electrically conductive diamond-like carbon (DLC) coating or a metal coating (such as a plating layer)).

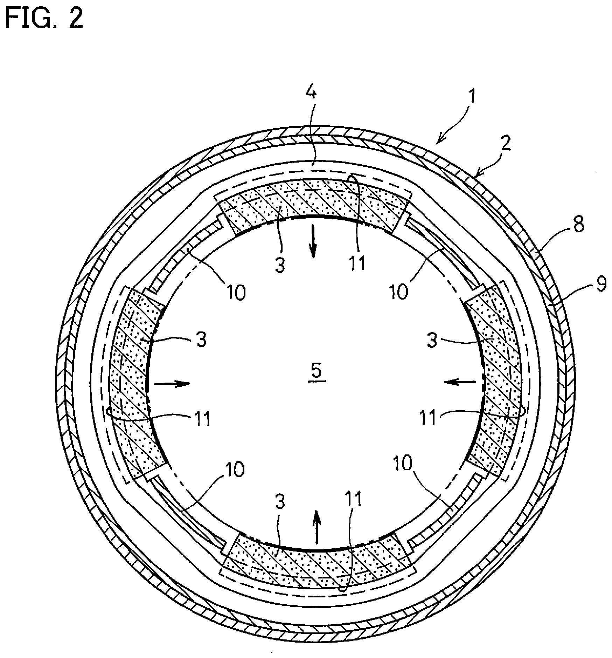

The elastic member 4 is a member for biasing the conductive members 3 radially inward, i.e., toward the motor shaft 5 (see the arrows in Fig. 2). As shown in Fig. 2, this elastic member 4 is trained around the conductive members 3 so as to engage in the peripheral grooves of the conductive members 3 along their outer peripheral edges. In this embodiment, a garter spring in which a coiled steel wire is formed into a ring shape is used as the elastic member 4, but, for example, a circlip (C-shaped snap ring) comprising a circular ring including a separated portion, an annular rubber member, or the like may also be used. In this embodiment, an arrangement is exemplified in which all of the conductive members 3 are biased by the single elastic member 4, but an alternative arrangement may be used in which the conductive members 3 are individually provided with elastic members 4.

The operation of this conductive unit 1 will be described. The motor shaft 5 is inserted through the conductive unit 1 along its center axis. As, due to the rotation of the motor shaft 5, the radially inner surfaces of the conductive members 3, which are biased toward the motor shaft 5 by the biasing force of the elastic member 4, are brought into sliding contact with the motor shaft 5, these radially inner surfaces gradually wear. Even if such wear occurs, since the conductive members 3 are always biased toward the motor shaft 5 by the elastic member 4, a contact state (i.e., a conductive state) between the motor shaft 5 and the conductive member 3 is maintained.

The conductive members 3 are in contact with the case body 2 (at least one of the outer annular part 8 and the retainer 9), thereby forming a conductive circuit, as a bypass path, among the motor shaft 5, the conductive members 3, the case body 2, and the housing 6. When such a conductive circuit is formed, the electric current flowing through the bearing 7, which is interposed between the motor shaft 5 and the housing 6, is reduced, thereby preventing electrolytic corrosion of the components of the bearing 7.

Since the above-described conductive unit 1 is configured to discharge electric charge generated in the motor shaft 5, to the housing 6 through the conductive members 3 and the case body 2, it is possible to prevent electrolytic corrosion of the bearing 7, which is disposed between the motor shaft 5 and the housing 6. Moreover, since the conductive members 3 are biased radially inward, i.e., toward the motor shaft 5, by the elastic member 4, even if one or more of the conductive members 3 become worn over time, a contact state between the motor shaft 5 and the conductive members 3 is maintained, thereby allowing the effect of preventing electrolytic corrosion to be sustained over a long period. Furthermore, the conductive members 3 have an initial radial width enough to withstand long-term use even if wear occurs over time.

In addition, since the above-described conductive unit 1 ensures a wide conductive area by bringing the radially inner surfaces of the conductive members 3 into surface contact with the outer peripheral surface of the motor shaft 5, this increases the amount of electric current discharged from the motor shaft 5 to the housing 6 through the conductive unit 1, thereby more effectively preventing electrolytic corrosion of the bearing 7.

Further, since the above-described conductive unit 1 includes a plurality of conductive members 3, even if a failure occurs in which the conductive function of (not all but) one or more of the conductive members 3 is lost, since the conductive function of the remaining conductive member or members 3 can be ensured, thereby reliably achieving the effect of preventing electrolytic corrosion. Furthermore, since a contact state between the motor shaft 5 and the conductive members 3 can be stabilized by a self-aligning function provided by the plurality of conductive members 3, the effect of preventing electrolytic corrosion can be further enhanced.

In the above embodiment, an arrangement is exemplified in which the motor shaft 5 is inserted through the conductive unit 1 along its center axis, and the conductive members 3 are brought into sliding contact with the motor shaft 5 by being biased radially inward by the elastic member 4. However, if the motor shaft 5 is provided on the radially outer side of the conductive unit 1 and the housing 6 is provided on the radially inner side of the conductive unit 1, a reverse arrangement may be used in which the conductive members 3 are biased radially outward by the elastic member 4.

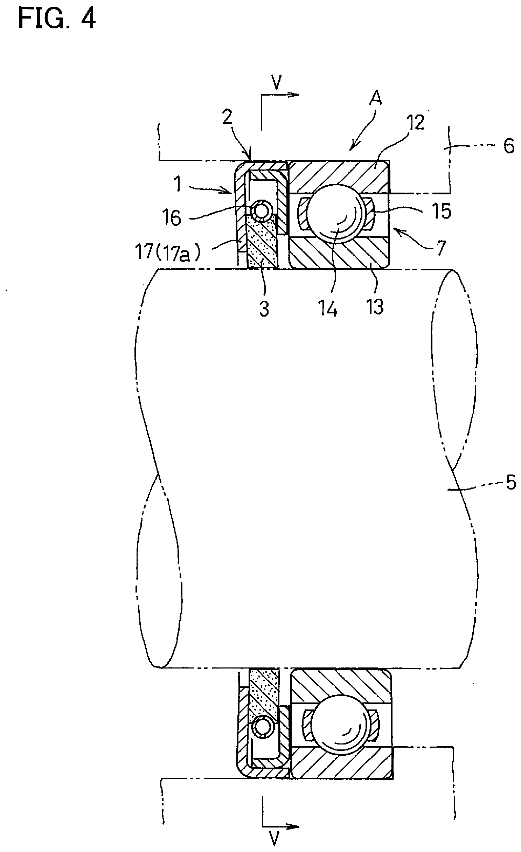

Fig. 4 illustrates an embodiment of a bearing unit A (electrolytic corrosion prevention bearing device) using a conductive unit 1 according to a second invention of the present application. The bearing unit A comprises the conductive unit 1 and a bearing 7 (ball bearing in this embodiment). The bearing 7 includes an outer ring 12, an inner ring 13 disposed on the radially inner side of the outer ring 12, rolling elements 14 disposed between the outer ring 12 and the inner ring 13, and a cage 15 that circumferentially retains the rolling elements 14 at predetermined intervals. The conductive unit 1 and the outer ring 12 of the bearing 7 are in abutment with each other.

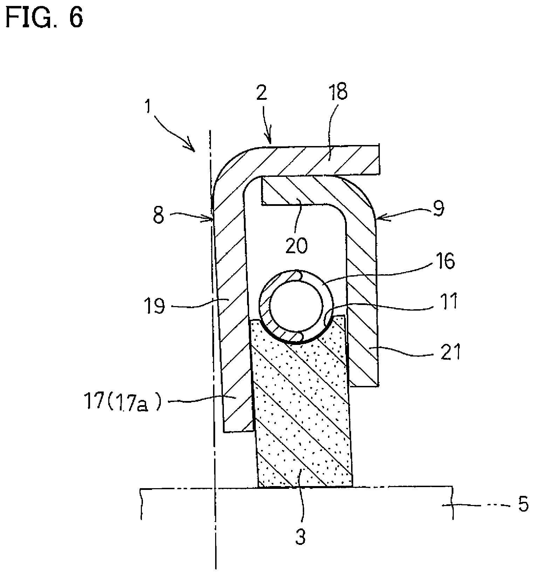

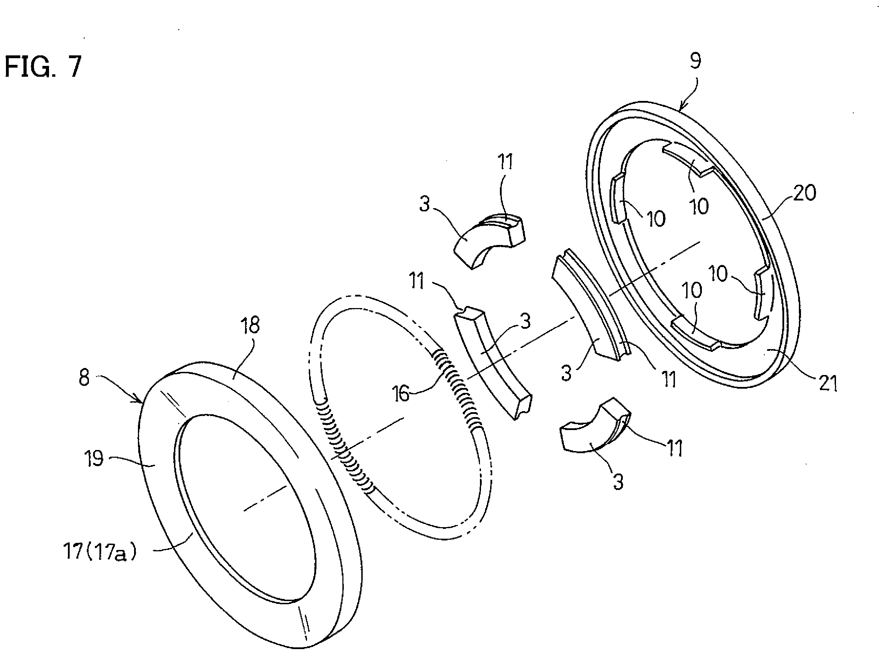

As shown in Figs. 4 to 7, this conductive unit 1 comprises, as its main components, a case body 2, conductive members 3, a radial elastic member 16, and a pressing mechanism 17. This conductive unit 1 is interposed between a motor shaft 5 used in, e.g., an e-Axle, and a housing 6, and is arranged so as to be adjacent to the bearing 7, which supports the motor shaft 5. The housing 6 is electrically grounded. In the following description, the direction along the rotational axis of the motor shaft 5 is referred to as the "axial direction", "axial", or "axially". The direction perpendicular to the rotational axis is referred to as the "radial direction", "radial", or "radially". The direction along the circumference around the rotational axis is referred to as the "circumferential direction", "circumferential", or "circumferentially".

The case body 2 is an annular, electrically conductive member that is fitted to the housing 6. The case body 2 comprises (i) an outer annular part 8 comprising a flange 18 extending in one axial direction from its outer peripheral edge, and an extension piece 19 extending radially inward from its outer peripheral edge, and (ii) a retainer 9 comprising a flange 20 extending in the other axial direction, which is opposite to the one axial direction, from its outer peripheral edge, and an extension piece 21 extending radially inward from its outer peripheral edge. As shown in Fig. 4, the flange 18 on the outer annular part 8 and the flange 20 on the retainer 9 are integrally combined together by press-fitting. Due to this integral combination, a peripheral groove that is open radially inward is defined by the flanges 18 and 20 and the extension pieces 19 and 21 of the outer annular part 8 and the retainer 9. After placing the flange 20 of the retainer 9 inside of the flange 18 of the outer annular part 8, a snap ring may be provided across the axial end surfaces of the outer annular part 8 and the retainer 9 so as to fix the outer annular part 8 and the retainer 9, thereby improving maintainability.

The outer annular part 8 and the retainer 9 are both formed of a steel material. The axial gap of the peripheral groove defined by integrally combining the outer annular part 8 and the retainer 9 together, is slightly larger than the axial width of each conductive member 3 such that the conductive member 3 is freely movable in the radial direction. The retainer 9 has a plurality of (four in this embodiment) bent portions 10 formed at predetermined angular intervals, and extending in the other axial direction (i.e., in the direction in which the flange 20 of the retainer 9 extends) from the inner edge of the extension piece 21.

Each conductive member 3 is disposed in the peripheral groove and is a circular arc-shaped member that has electrical conductivity and protrudes radially inward from the case body 2 so as to come into sliding contact with the motor shaft 5. A respective one of the conductive members 3 is accommodated between each circumferentially adjacent pair of the bent portions 10 on the retainer 9. In this embodiment, four conductive members 3 are circumferentially arranged at equal angular intervals. The number of the conductive members 3 can be changed as appropriate, but it is preferable that a plurality of conductive members be provided. The number of the bent portions 10 on the retainer 9 is determined in correspondence with the number of the conductive members 3. In this embodiment, polytetrafluoroethylene (PTFE) containing carbon is used as the material of each conductive member 3. The radially inner surface of each conductive member 3 constitutes a part of the cylindrical surface and is in surface contact with the outer peripheral surface of the motor shaft 5. An outer peripheral groove 11 (i.e., a peripheral groove) is formed along the outer peripheral edge of each conductive member 3.

As the material of each conductive member 3, instead of PTFE containing carbon, a metal, carbon, or an electrically conductive resin, rubber, or ceramic, such as polyetheretherketone (PEEK) containing carbon, or a composite material of these materials may be used. The surface of each conductive member 3 (especially the radially inner surface thereof that is in sliding contact with the motor shaft 5) may be subjected to a surface treatment such as a coating for improving electrical conductivity and wear resistance (for example, an electrically conductive diamond-like carbon (DLC) coating or a metal coating (such as a plating layer)).

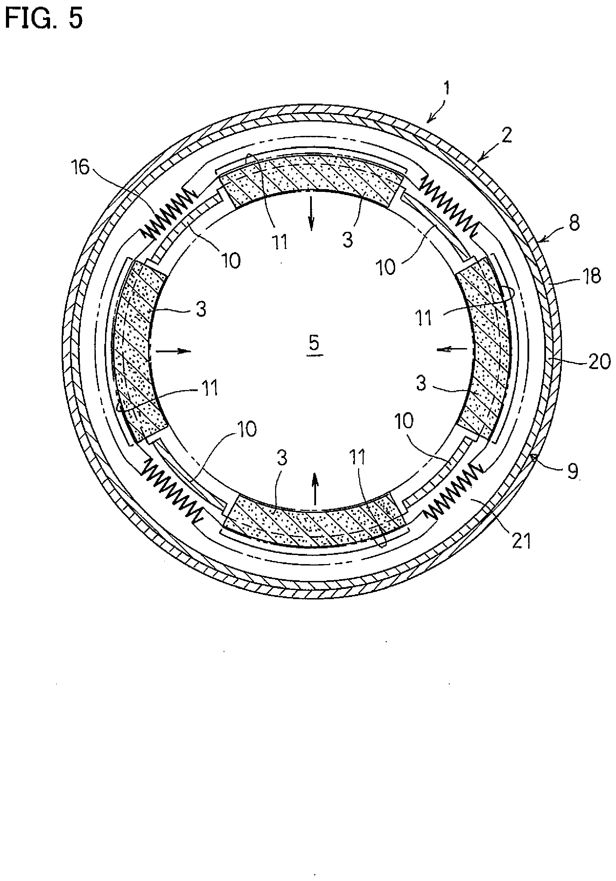

The radial elastic member 16 is disposed in the peripheral groove and is a member for biasing the conductive members 3 radially inward (see the arrows in Fig. 5). As shown in Fig. 5, this radial elastic member 16 is trained around the conductive members 3 so as to engage in the outer peripheral grooves 11 of the conductive members 3 along their outer peripheral edges. In this embodiment, a garter spring in which a coiled steel wire is formed into a ring shape, is used as the radial elastic member 16, but, for example, a circlip (C-shaped snap ring) comprising a circular ring including a separated portion, an annular rubber member, or the like may also be used. In this embodiment, an arrangement is exemplified in which all of the conductive members 3 are biased by the single radial elastic member 16, but an alternative arrangement may be used in which the conductive members 3 are individually provided with radial elastic members 16.

The pressing mechanism 17 is a mechanism for pressing the conductive members 3 from one axial side toward the other axial side. In this embodiment, the pressing mechanism 17 is a bent portion 17a that is formed on at least one of a pair of walls defining the peripheral groove (i.e., the extension pieces 19 and 21 of the outer annular part 8 and the retainer 9) so as to bend toward the inside of the peripheral groove on the radially inner side relative to the radially outer side. More specifically, the bent portion 17a is formed by inclining the entire extension piece 19 of the outer annular part 8 by a predetermined angle relative to the radial direction toward the inside of the peripheral groove from the portion of the extension piece 19 connected to the flange 18. Further, an alternative arrangement may be used in which the bent portion 17a is formed on only the retainer 9, or formed on each of the outer annular part 8 and the retainer 9.

The operation of this conductive unit 1 will be described. The motor shaft 5 is inserted through the conductive unit 1 along its center axis. As due to the rotation of the motor shaft 5, the radially inner surfaces of the conductive members 3, which are biased toward the motor shaft 5 by the biasing force of the radial elastic member 16, are brought into sliding contact with the motor shaft 5, these radially inner surfaces gradually wear. Even if such wear occurs, since the conductive members 3 are always biased toward the motor shaft 5 by the radial elastic member 16, a contact state (i.e., a conductive state) between the motor shaft 5 and the conductive member 3 is maintained.

The conductive members 3 are pressed toward the retainer 9 by the pressing mechanism 17 (specifically, by the bent portion 17a on the extension piece 19 of the outer annular part 8). As a result, the axial gaps between the conductive members 3 and the case body 2 (i.e., the outer annular part 8 and the retainer 9) disappear, thereby forming a conductive circuit, as a bypass path, among the motor shaft 5, the conductive members 3, the case body 2, and the housing 6. When such a conductive circuit is formed, the electric current flowing through the bearing 7, which is interposed between the motor shaft 5 and the housing 6, is reduced, thereby preventing electrolytic corrosion of the components of the bearing 7.

Since the conductive unit 1 and the bearing unit A as described above are configured to discharge electric charge generated in the motor shaft 5 to the housing 6 through the conductive members 3 and the case body 2, it is possible to prevent electrolytic corrosion of the bearing 7, which is disposed between the motor shaft 5 and the housing 6. Moreover, since the conductive members 3 are biased radially inward, i.e., toward the motor shaft 5, by the radial elastic member 16, even if one or more of the conductive members 3 become worn over time, a contact state between the motor shaft 5 and the conductive members 3 is maintained, thereby allowing the effect of preventing electrolytic corrosion to be sustained over a long period. Furthermore, the conductive members 3 preferably have an initial radial width enough to withstand long-term use, even if wear occurs over time.

In addition, since the conductive unit 1 and the bearing unit A as described above are configured such that the conductive members 3 are pressed from one axial side toward the other axial side by the bent portion 17a as the pressing mechanism 17, a contact state between the conductive members 3 and the case body 2 can be maintained, thereby achieving stable conductive performance.

Further, since the conductive unit 1 and the bearing unit A as described above ensure a wide conductive area by bringing the radially inner surfaces of the conductive members 3 into surface contact with the outer peripheral surface of the motor shaft 5, this increases the amount of electric current discharged from the motor shaft 5 to the housing 6 through the conductive unit 1, thereby more effectively preventing electrolytic corrosion of the bearing 7.

Further, since the conductive unit 1 and the bearing unit A as described above include a plurality of conductive members 3, even if a failure occurs in which the conductive function of (not all but) one or more of the conductive members 3 is lost, since the conductive function of the remaining conductive member or members 3 can be ensured, thereby reliably achieving the effect of preventing electrolytic corrosion. Furthermore, since a contact state between the motor shaft 5 and the conductive members 3 can be stabilized by a self-aligning function provided by the plurality of conductive members 3, the effect of preventing electrolytic corrosion can be further enhanced.

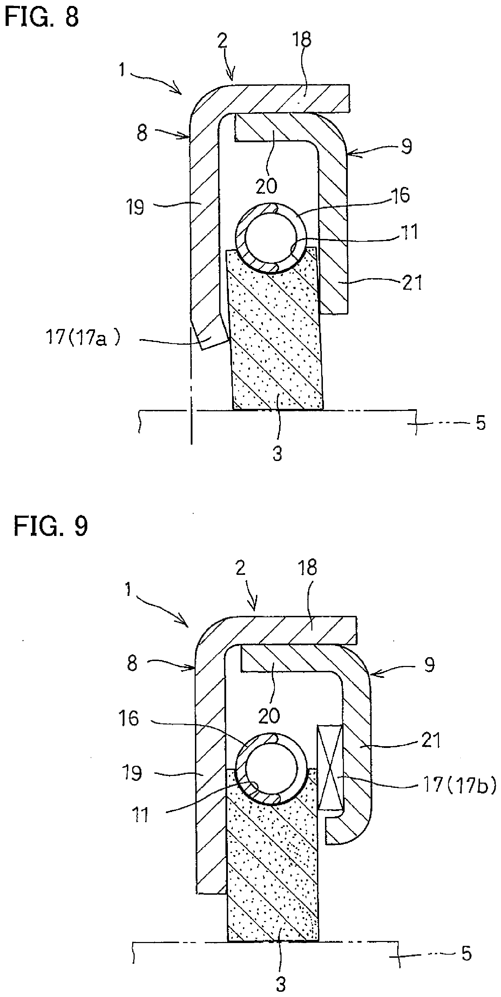

A first variation of the conductive unit 1 is shown in Fig. 8. The conductive unit 1 according to the first variation has the same basic structure as the conductive unit 1 shown in Fig. 4 and other related drawings, but differs therefrom in that the bent portion 17aas the pressing mechanism 17 is formed on only a portion of the radially distal end of the extension piece 19 of the outer annular part 8. In this arrangement, too, since the conductive members 3 can be pressed from one axial side toward the other axial side by the bent portion 17a, a contact state between the conductive members 3 and the case body 2 can be maintained, thereby achieving stable conductive performance. As with the conductive unit 1 shown in Fig. 4, an alternative arrangement may be used in which the bent portion 17a is formed on only the retainer, or formed on each of the outer annular part 8 and the retainer 9.

A second variation of the conductive unit 1 is shown in Fig. 9. The conductive unit 1 according to the second variation has the same basic structure as the conductive unit 1 shown in Fig. 4, but differs therefrom in that the pressing mechanism 17 is an axial elastic member 17b interposed in an axial gap between the inner surface of the peripheral groove and the conductive members 3. In this arrangement, too, since the conductive members 3 can be pressed from one axial side toward the other axial side by the axial elastic member 17b, a contact state between the conductive members 3 and the case body 2 (specifically, the outer annular part 8) can be maintained, thereby achieving stable conductive performance. While, in the second variation, an arrangement is exemplified in which the axial elastic member 17b is interposed between the retainer 9 and the conductive members 3, an alternative arrangement may be used in which the axial elastic member 17b is interposed between the outer annular part 8 and the conductive members 3.

In the conductive unit 1 according to the second variation, the axial elastic member 17b may be formed of an electrically conductive material composed of a metal, carbon, or an electrically conductive resin, rubber, or ceramic, or a composite material of these materials. If such a material is used, since a plurality of conductive routes can be ensured, including (i) a conductive route through which electric current directly flows from the conductive members 3 toward the case body 2 (specifically, the outer annular part 8), and (ii) a conductive route through which electric current flows from the conductive members 3 to the case body 2 (specifically, the retainer 9) through the axial elastic member 17b, more stable conductive performance can be achieved.

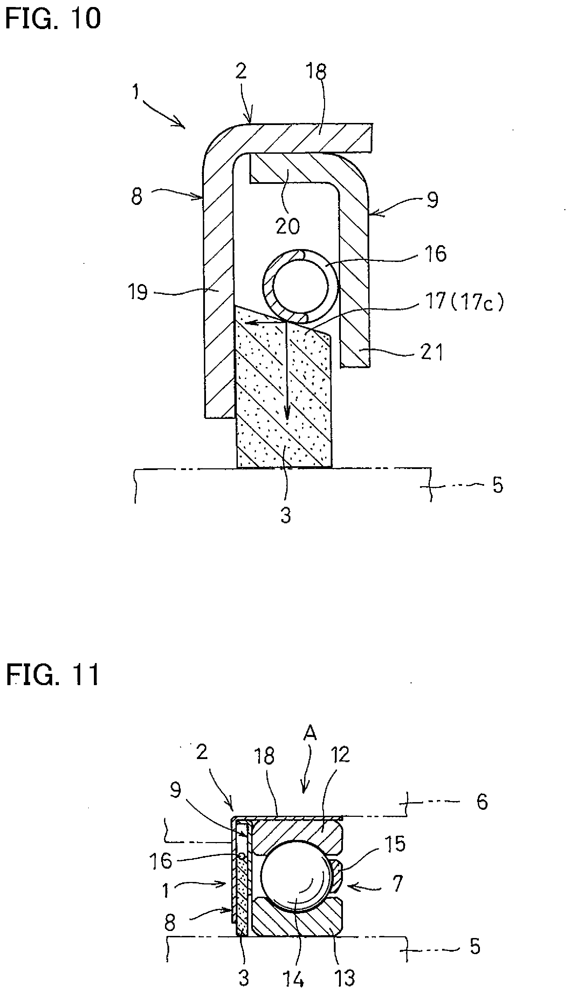

A third variation of the conductive unit 1 is shown in Fig. 10. The conductive unit 1 according to the third variation has the same basic structure as the conductive unit 1 shown in Fig. 4, but differs therefrom in that the pressing mechanism 17 is an inclined surface portion 17c formed on an abutment portion of each conductive member 3 abutting against the radial elastic member 16, the inclined surface portion 17c having a normal line inclined toward one axial side. The inclined surface portion 17c is inclined so as to gradually approach the motor shaft 5 from the side closer to the outer annular part 8 toward the side closer to the retainer 9. When the radial elastic member 16 comes into abutment with the inclined surface portions 17c, the radial component of the abutting force acts as a force for pressing the conductive members 3 against the motor shaft 5, and the axial component acts as a force for pressing each conductive members 3 against the extension piece 19 of the outer annular part 8.

By thus allowing the biasing force of the radial elastic member 16 to be divided into a radial component and an axial component by the inclined surface portions 17, it is possible to maintain a contact state between the conductive members 3 and the motor shaft 5 as well as a contact state between the conductive members 3 and the case body 2 (specifically, the outer annular part 8), and thus to achieve stable conductive performance. Instead of the arrangement of Fig. 10, a reverse arrangement may be used in which the inclined surface portion 17c may be inclined so as to gradually approach the motor shaft 5 from the side closer to the retainer 9 toward the side closer to the outer annular part 8.

In the conductive unit 1 according to the third variation, as with the conductive unit 1 shown in Fig. 4, it is preferable that the radial elastic member 16 be formed of a metal. If such a material is used, since a plurality of conductive routes can be ensured, including (i) a conductive route through which electric current directly flows from the conductive members 3 toward the case body 2 (specifically, the outer annular part 8), and (ii) a conductive route through which electric current flows from the conductive members 3 to the case body 2 (specifically, the retainer 9) through the axial elastic member 16, more stable conductive performance can be achieved.

A variation of the bearing unit A is shown in Fig. 11. The bearing unit A according to this variation has the same basic structure as the bearing unit A shown in Fig. 4, in which the conductive unit 1 and the bearing 7 are separate components. However, the bearing unit A according to the variation of Fig. 11 differs from the bearing unit shown in Fig. 4 in that the flange 18 of the outer annular part 8 of the conductive unit 1 shown in Fig. 4 is extended axially to the radially outer side of the outer ring 12 of the bearing 7, thereby integrally combining the conductive unit 1 and the bearing 7 together as a single bearing unit A. With this arrangement, operations and effects similar to those of the conductive unit 1 and the bearing unit A as shown in Fig. 4, are achieved. Further, by making the size of the bearing unit A conform to the bearing boundary dimensions standardized under the Japanese Industrial Standard (JIS B 1512-1: 2011), it is possible to reduce the weight and width of the bearing unit A including the conductive unit 1.

In some of the above-described embodiments, an arrangement is exemplified in which the motor shaft 5 is inserted through the conductive unit 1 along its center axis, and the conductive members 3 are brought into sliding contact with the motor shaft 5 by being biased radially inward by the radial elastic member 16. However, if the motor shaft 5 is provided on the radially outer side of the conductive unit 1 and the housing 6 is provided on the radially inner side of the conductive unit 1, a reverse arrangement may be used in which the conductive members 3 are biased radially outward by the radial elastic member 16.

The above-described embodiments are mere examples in every respect, and the present invention is not limited thereto. The scope of the present invention is indicated by not the above description but the claims, and should be understood to include all modifications within the meaning and scope equivalent to the scope of the claims.

In the above-described embodiment according to the first invention of the present application, as shown in Fig. 1, the conductive unit 1 and the bearing 7,which constitute the electrolytic corrosion prevention bearing device A, are separate components. However, for example, an alternative arrangement may be used in which the flange of the outer annular part 8 of the conductive unit 1 is extended axially toward the outer ring of the bearing 7, thereby integrally combining the conductive unit 1 and the bearing 7 together.

### DESCRIPTION OF REFERENCE NUMERALS

1: Conductive unit
2: Case body
3: Conductive member
4: Elastic member
5: Motor shaft
6: Housing
7: Bearing
8: Outer annular part
9: Retainer
10: Bent portion
12: Outer ring
13: Inner ring
14: Rolling element
15: Cage
16: Radial elastic member
17: Pressing mechanism
17a: Bent portion
17b: Axial elastic member
17c: Inclined portion

## Claims

1. A conductive unit comprising:
an annular, electrically conductive case body (2) fitted to a housing (6);
at least one conductive member (3) having electrical conductivity, the at least one conductive member (3) protruding radially inward from the case body (2) and kept in sliding contact with a motor shaft (5); and
an elastic member (4) biasing the at least one conductive member (3) toward the motor shaft (5).

2. The conductive unit according to claim 1, wherein the case body (2) comprises an outer annular part (8); and a retainer (9) fitted in the outer annular part (8),
wherein the at least one conductive member (3) comprises a plurality of conductive members (3), and
wherein the retainer (9) is formed with a plurality of bent portions (10) by which the conductive members (3) are disposed circumferentially at equal intervals.

3. The conductive unit according to claim 2, wherein the elastic member (4) is a spring member trained around the conductive members (3).

4. The conductive unit according to any one of claims 1 to 3, wherein the at least one conductive member (3) and the conductive members (3) are each formed of an electrically conductive material composed of a metal, carbon, an electrically conductive resin, rubber, or ceramic, or a composite material of these materials.

5. An electrolytic corrosion prevention bearing device comprising:
the conductive unit (1) according to any one of claims 1 to 4; and
a bearing (7) supporting a motor, and disposed such that an end surface of an outer ring of the bearing (7) abuts against the conductive unit (1).

6. A conductive unit comprising:
an annular, electrically conductive case body (2) fitted to a housing (6), and having a peripheral groove that is open radially inward;
at least one conductive member (3) having electrical conductivity, disposed in the peripheral groove, and protruding radially inward from the case body (2) so as to come into sliding contact with a motor shaft (5);
a radial elastic member (16) disposed in the peripheral groove, and biasing the at least one conductive member (3) radially inward; and
a pressing mechanism (17) for pressing the at least one conductive member (3) in the peripheral groove from a first axial side toward a second axial side.

7. The conductive unit according to claim 6, wherein the pressing mechanism (17) is a bent portion (17a) formed on at least one of a pair of walls defining the peripheral groove, the bent portion (17a) being bent toward an inside of the peripheral groove on a radially inner side relative to a radially outer side.

8. The conductive unit according to claim 6, wherein the pressing mechanism (17) is an axial elastic member (17b) interposed in an axial gap between an inner surface of the peripheral groove and the at least one conductive member (3).

9. The conductive unit according to claim 8, wherein the axial elastic member (17b) is formed of an electrically conductive material composed of a metal, carbon, or an electrically conductive resin, rubber, or ceramic, or a composite material of these materials.

10. The conductive unit according to claim 6, wherein the pressing mechanism (17) is an inclined surface portion (17c) formed on an abutment portion of the at least one conductive member (3) abutting against the radial elastic member (16), the inclined surface portion (17c) having a normal line inclined toward the first axial side.

11. The conductive unit according to any one of claims 6 to 10, wherein the at least one conductive member (3) comprises a plurality of conductive members (3).

12. The conductive unit according to claim 11, wherein the case body (2) comprises an outer annular part (8), and a retainer (9) fitted in the outer annular part (8), and
wherein the retainer (9) is formed with a plurality of bent portions (10) by which the conductive members (3) are disposed circumferentially at equal intervals.

13. The conductive unit according to claim 6, wherein the radial elastic member (16) is a metallic spring member trained around the conductive members (3).

14. The conductive unit according to any one of claims 6 to 13, wherein the at least one conductive member (3) and the conductive members (3) are each formed of an electrically conductive material composed of a metal, carbon, an electrically conductive resin, rubber, or ceramic, or a composite material of these materials.

15. A bearing unit comprising:
the conductive unit (1) according to any one of claims 6 to 14; and
a bearing (7) supporting the motor shaft (5), the bearing (7) comprising:
an outer ring (12);
an inner ring (13) disposed on a radially inner side of the outer ring (12);
rolling elements (14) disposed between the outer ring (12) and the inner ring (13); and
a cage (15) retaining the rolling elements (14) circumferentially at predetermined intervals,
the outer ring (12) being disposed to abut against the conductive unit (1).
